Europäisches Patentamt

European Patent Office

Office européen des brevets

(19)

(11) Numéro de publication: **0 113 638**
**B 1**

(12) **FASCICULE DE BREVET EUROPEEN**

(45) Date de publication du fascicule du brevet:
**29.10.86**

(21) Numéro de dépôt: **83420181.6**

(22) Date de dépôt: **30.11.83**

(51) Int. Cl.⁴: **C 08 J 5/18,** B 05 D 1/26,
B 32 B 27/30

(54) Film d'alcool polyvinylique et son application pour la préparation de films composites imperméables aux gaz.

(30) Priorité: **01.12.82 FR 8220119**

(43) Date de publication de la demande:
**18.07.84 Bulletin 84/29**

(45) Mention de la délivrance du brevet:
**29.10.86 Bulletin 86/44**

(84) Etats contractants désignés:
**BE DE GB IT NL**

(56) Documents cités:
**DE - B - 1 202 974**
**FR - A - 1 343 818**
**FR - A - 2 417 520**
**GB - A - 1 190 018**

**CHEMICAL ABSTRACTS, vol. 85, no. 20, 15 novembre 1976, page 64, no. 144348x, Columbus, Ohio, US**
**CHEMICAL ABSTRACTS, vol. 81, no. 14, 7 octobre 1974, page 51, no. 78918x, Columbus, Ohio, US**
**CHEMICAL ABSTRACTS**

(73) Titulaire: **RHONE-POULENC FILMS, 25, quai Paul Doumer, F-92408 Courbevoie (FR)**

(72) Inventeur: **Bonnebat, Claude, 5, rue Alfred de Musset, F-77340 Pontault-Combault (FR)**
Inventeur: **Macabrey, Louis, 25, rue de Boulogne, F-77290 Mitry le Neuf (FR)**

(74) Mandataire: **Rioufrays, Roger et al, RHONE-POULENC INTERSERVICES Service Brevets Chimie Centre de Recherches de Saint-Fons B.P. 62, F-69192 Saint-Fons Cédex (FR)**

ACTORUM AG

## Description

La présente invention a pour objet un film d'alcool polyvinylique et son application à la préparation de films ou feuilles composites en matière thermoplastique, notamment en polypropylène ou en polytéréphtalate d'éthylène glycol, présentant une imperméabilité élevée aux gaz et aux arômes.

La demande de brevet japonais 73/42 950 (cf Chemical abstracts 81, 14, 78 918x) décrit l'obtention de films à surface lisse par extrusion d'un mélange fondu alcool polyvinylique-eau à une température d'environ 120°C, la température de filière étant de 95°C; le mélange renferme également du glycérol. Ces conditions d'obtention ne permettent pas d'obtenir un film ayant de hautes propriétés barrières et résistant à l'eau. L'invention a pour but de surmonter ces inconvénients et de préparer un film ayant de hautes propriétés barrières et résistant à l'eau.

Le film d'alcool polyvinylique faisant l'objet de l'invention est obtenu par fusion d'une solution aqueuse d'alcool polyvinylique puis extrusion à travers une filière plate, éventuellement suivie d'un mono ou biétirage du film obtenu et d'un traitement thermique, selon un procédé caractérisé en ce que:

1) la matière fondue soumise à extrusion est obtenue par plastification par cisaillement et fusion de granules (ou flocons) d'alcool polyvinylique, granules contenant de 25 à 35% en poids d'eau (de préférence environ 30% en poids d'eau) à une température supérieure à la température de fusion d'équilibre du mélange alcool polyvinylique-eau constituant les granules;

2) l'opération d'extrusion à travers la filière plate est effectuée à une température au moins égale à la température de fusion d'équilibre de mélange alcool polyvinylique-eau, mais inférieure à celle à laquelle la tension de vapeur de l'eau est suffisante pour provoquer à l'air la formation de bulles.

L'alcool polyvinylique utilisé pour préparer les granules d'alcool polyvinylique est un composé ayant un degré de pureté élevé, c'est-à-dire un alcool polyvinylique fortement hydrolysé possédant un indice d'ester bas, inférieur à 20.

Parmi les alcools polyvinyliques à bas indice d'ester, on choisit de préférence ceux ayant un taux d'éléments syndiotactiques supérieur à 50% en poids, une teneur en cendres inférieure à 1,5% en poids et une proportion d'éléments anormaux (tels que des enchainements glycol-1,2) inférieure à 1,5 enchainement anormal pour 100 unités monomères; les alcools polyvinyliques de ce type possèdent un indice d'ester inférieur à 10.

Le poids moléculaire de l'alcool polyvinylique n'est pas critique; des produits commerciaux présentant une viscosité de 3 à 70 cPo (mesure effectuée à 20°C à partir d'une solution aqueuse à 4% en poids dans un viscosimètre du type Oswald) sont utilisables.

Les granules d'alcool polyvinylique sont préparées d'une manière connue, par imprégnation d'une poudre d'alcool polyvinylique avec la quantité d'eau désirée (de manière à obtenir un mélange contenant 25 à 35% en poids d'eau et de préférence 30% en poids d'eau), à une température comprise entre 60 et 90°C; on obtient ainsi des granules qui ne collent pas et présentent une bonne aptitude à l'écoulement.

L'opération de plastification par cisaillement et fusion des granules peut être réalisée à l'aide d'une extrudeuse du type mono ou double vis.

Ladite opération est réalisée à une température supérieure à la température de fusion d'équilibre du mélange eau-alcool polyvinylique.

La température de fusion d'équilibre T d'un mélange eau alcool-polyvinylique, est donnée par l'équation suivante:

$$T(°K) = 1000 \; \frac{1 + (0,8.V^2 H_2O)}{2,028 + (3,6.VH_2O)}$$

où $VH_2O$ est la fraction volumique de l'eau dans le mélange considéré.

Cette équation a été établie en considérant que la température de fusion de l'alcool polyvinylique est de 493°K.

On peut relier la fraction volumique de l'eau $VH_2O$ à la fraction pondérale $pH_2O$ de la manière suivante:

$$VH_2O = \frac{1,29.pH_2O}{1 + (0,29.pH_2O)}$$

en prenant 1,29 comme densité de l'alcool polyvinylique.

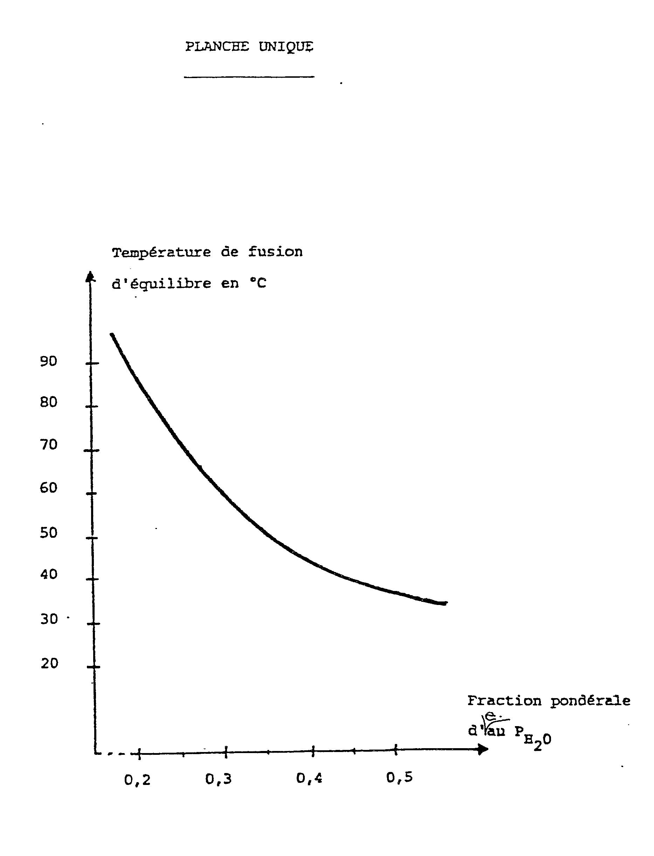

La figure 1 en annexe représente un diagramme donnant les valeurs de T en °C en fonction de $pH_2O$ dans le mélange alcool polyvinylique-eau.

La température de plastification et de fusion des granulés d'alcool polyvinylique est de préférence au moins égale à une température supérieure de 100°C à la température de fusion d'équilibre T en °C du mélange alcool polyvinylique-eau considéré. Tout particulièrement, cette température est choisie dans la zone préférée indiquée ci-dessus de manière à se situer dans l'intervalle de 150 à 220°C.

Pour des granules renfermant environ 30% en poids d'eau (c'est-à-dire pour $pH_2O = 0,3$), le diagramme de la figure 1 indique une température de fusion d'équilibre voisine de 60°C; la plastification et la fusion de telles granules se feront donc dans l'extrudeuse à une température supérieure à 60°C et de préférence au moins égale à 160°C; tout particulièrement on choisira une température comprise entre 160 et 220°C.

L'opération d'extrusion de la matière fondue lors du passage au travers de la filière plate, est réalisée, au besoin en effectuant un refroidissement contrôlé, à une température comprise entre la température de fusion d'équilibre des granules et une température inférieure à 110°C et de préférence entre 5 degrés au-dessus de ladite température de fusion d'équilibre et 98°C. Ainsi pour l'extrusion à travers une filière plate d'une matière fondue contenant environ 30% en poids d'eau, on choisira préférentiellement une température comprise entre 65 et 98°C.

Le film d'alcool polyvinylique ainsi obtenu est un film gélifié, non collant et sans bulle; il est homogène, facilement recristallisable, et présente une épaisseur constante sur toute sa surface (généralement de l'ordre de 0,1 à 2 mm), ce qui le rend apte à être transformé directement en un film uniforme mono ou biétiré possédant de bonnes propriétés mécaniques et une imperméabilité élevée aux gaz. Il est en outre résistant à l'eau à température ambiante.

L'opération de monoétirage peut être réalisée à une température de l'ordre de 100 à 130°C, à l'aide d'un dispositif d'étirage longitudinal muni d'un groupe de rouleaux lents et d'un groupe de rouleaux rapides de manière à obtenir un taux d'étirage longitudinal de l'ordre de 2 à 5.

L'opération de biétirage peut être constituée d'une opération d'étirage longitudinal suivie d'une opération d'étirage transversal ou inversement, l'opération d'étirage longitudinal étant réalisée tel que décrit ci-dessus.

L'opération d'étirage transversal peut être réalisée à une température de l'ordre de 100 à 150°C, à l'aide d'un dispositif d'étirage transversal maintenant le film sous tension à l'aide de pinces; lors de cette opération les pinces se déplacent de façon telle que la distance entre les pinces comptée perpendiculairement à la directement du déplacement croît avec ce déplacement; un taux d'étirage transversal de l'ordre de 2 à 8 est généralement obtenu.

Le film mono ou biétiré obtenu peut alors être soumis à un traitement thermique à une température supérieure à 130°C et de préférence comprise entre 140 et 220°C dans le but d'accroître encore sa cristallinité, sa résistance à l'eau et sa résistance à la diffusion des gaz.

On peut ainsi obtenir des films mono ou biétirés présentant une épaisseur constante généralement comprise entre 5 et 200 μm.

Une variante du procédé permettant de préparer le film faisant l'objet de l'invention, consiste à mettre en œuvre des granules d'alcool polyvinylique telles que définies ci-dessus contenant en outre un plastifiant non ou peu volatil tel que l'éthylène glycol, les polyéthylène glycols, le glycérol, le triméthylolpropane, néopentylglycol, en quantité telle que la température de transition vitreuse de l'alcool polyvinylique plastifié soit toujours supérieure à 40°C, préférentiellement le point de transition vitreuse de l'alcool polyvinylique, ne décroit pas de plus de 30°C de manière à conserver au film sa rigidité dans les conditions usuelles d'utilisation à titre d'emballage (température allant jusqu'à 40°C). Les teneurs acceptables en plastifiant permament peuvent être aisément déterminées par l'homme de l'art en mesurant les variations du module en fonction de la teneur en plastifiant et de la température d'utilisation. Toutefois cette quantité de plastifiant n'est pas suffisante pour permettre la préparation d'un film à partir d'alcool polyvinylique sans adjonction de la quantité complémentaire d'eau revendiquée. Cet ajout d'une très faible quantité de plastifiant permet d'arrêter si nécessaire la fabrication du film en cours d'opération (au cours de la fusion ou de l'extrusion à travers la filière par exemple) puis de continuer ladite opération à un moment quelconque désiré et ce sans craindre une éventuelle prise en masse de la matière avec blocage des appareils, prise en masse qui pourrait être occasionnée par l'évaporation d'une partie de l'eau contenue dans l'alcool polyvinylique. On pourra favorablement mettre en œuvre par exemple jusqu'à 6% en poids de glycérol par rapport au poids d'alcool polyvinylique, et de préférence de 3 à 5% en poids de glycérol.

Les films d'alcool polyvinyliques faisant l'objet de l'invention peuvent être utilisés pour la préparation de films ou feuilles composites en matière thermoplastique présentant une imperméabilité élevée aux gaz et aux arômes, par dépôt direct dudit film d'alcool polyvinylique sur un film ou une feuille en matière thermoplastique enduit sur sa face à revêtir d'alcool polyvinylique d'un adhésif compatible avec la matière thermoplastique et l'alcool polyvinylique.

Parmi les matières thermoplastiques pouvant être utilisées, on peut citer les polymères amorphes tels que polystyrène, polychlorure de vinyle, polyacrylates et polycarbonates; les polymères et copolymères semi-cristallins tels que polyéthylène, polypropylène et polybutène-1; les polyamides; les polyesters tels que les polytéréphtalates et polynaphtalénates d'alkylène glycol.

Les matières thermoplastiques préférées sont le polypropylène et le polytéréphtalate d'éthylène glycol.

Un premier mode de préparation desdits films composites consiste:

– à déposer directement le film d'alcool polyvinylique non étiré sur un film support non-étiré en matière thermoplastique, et enduit sur sa face à revêtir d'alcool polyvinylique d'un adhésif compatible avec la matière thermoplastique et l'alcool polyvinylique;
– à mono ou biétirer le film composite obtenu;
– et à traiter éventuellement le film composite étiré à une température supérieure à 130°C et de préférence comprise entre 140 et 220°C.

Selon ce mode, le dépôt direct du film d'alcool polyvinylique sur le film en matière thermoplastique enduit peut être réalisé à l'aide d'un dispositif d'extrusion-laminage comprenant des cylindres régulés en pression (60 ± 10 daN/cm) et en température de (50 à 200°C) ou à l'aide d'un dispositif de complexage par plaquage en discontinu à une température de 60 à 200°C et sous une pression de l'ordre de 50 à 100 bars.

Les opérations de mono et biétirages peuvent être réalisées dans des conditions semblables à celles décrites ci-dessus concernant le mono et le biétirage des films d'alcool polyvinylique.

Les films composites mono ou biétirés peuvent alors être soumis à un traitement thermique à une température supérieure à 130°C et de préférence comprise entre 140 et 220°C dans le but d'accroître leur cristallinité et leur stabilité dimensionnelle, ainsi que leur résistance à l'eau, leur rigidité et leur résistance à la diffusion des gaz.

Un deuxième mode de préparation de films composites consiste à déposer directement par complexage un film mono ou biétiré d'alcool polyvinylique, éventuellement traité thermiquement sur un film ou une feuille de matière thermoplastique mono ou biétiré éventuellement métallisé et enduit sur sa face à revêtir d'alcool polyvinylique d'un adhésif compatible avec la matière thermoplastique et l'alcool polyvinylique.

Les films composites selon l'invention sont des films étirés comportant un revêtement d'alcool polyvinylique présentant une épaisseur constante généralement comprise entre 10 et 200 µ. Ils conservent les caractéristiques mécaniques élevées du support en matière thermoplastique tout en présentant une perméabilité aux gaz élevée.

La perméabilité $\Pi$ aux gaz d'un film composite d'épaisseur e, constitué d'une couche support de perméabilité $\Pi_1$ et d'épaisseur $e_1$ et d'un film d'alcool polyvinylique de perméabilité $\Pi_2$ et d'épaisseur $e_2$, peut être décrite par la relation:

$$\frac{e}{\pi} = \frac{e_1}{\pi_1} + \frac{e_2}{\pi_2}$$

La principale caractéristique, quant à l'efficacité de la couche barrière est constituée par le rapport

$$\frac{\pi_1}{\pi_2}$$

L'emploi d'un film d'alcool polyvinylique étiré ou non étiré faisant l'objet de l'invention permet d'obtenir un rapport

$$\frac{\pi_1}{\pi_2}$$

très élevé et ce même dans le cas où le revêtement d'alcool polyvinylique est exposé à température élevée et à un taux d'humidité relative élevé.

Ainsi un rapport

$$\frac{\pi_1}{\pi_2}$$

de l'ordre de 30–100 est obtenu pour un film composite alcool polyvinylique-polytéréphtalate d'éthylène glycol selon l'invention (à une température de 30°C avec un taux d'humidité relative de 65%), contre un rapport

$$\frac{\pi_1}{\pi_2}$$

de 5–10 pour un film composite chlorure de polyvinylidène-polytéréphtalate d'éthylène glycol et de 5–20 pour un film composite polyacrylonitrile-polytéréphtalate d'éthylène glycol, et ce dans les mêmes conditions en utilisant de l'oxygène ou du $CO_2$ comme gaz diffusant.

Il est bien entendu possible de renforcer la protection mécanique des films composites faisant l'objet de l'invention ou d'améliorer leur scellabilité par enduction du revêtement d'alcool polyvinylique à l'aide d'un latex (par exemple de chlorure de polyvinylidène) ou d'un polymère fondu (par exemple de polyéthylène).

Les exemples suivants sont donnés à titre indicatif et ne peuvent être considérés comme une limite du domaine et de l'esprit de l'invention.

Exemple 1

On utilise un alcool polyvinylique du commerce portant la marque RHODOVIOL 30-5 de la Société RHONE-POULENC et présentant les caractéristiques suivantes

– indice d'ester: 5 (soit un taux d'hydrolyse de 99% en poids ou 99,5% en mole)

– viscosité d'une solution à 4% en poids mesurée à 20°C au viscosimètre OSTWALD: 2,8 Pa s

– teneur en cendres: <1% en poids

– taux de syndiotacticité: 54% de triades syndiotactiques; la mesure est effectuée à 80°C dans l'eau lourde au spectromètre RMN C VARIAN CFT 20 selon la méthode de INOUE et al (Polymer Journal 1973, page 244) et WU et OVENAL (Macromolecules 1973, page 582)

– enchainements glycol-1,2: 0,66 enchainement pour 100 unités monomères.

On lave à froid la poudre d'alcool dans une centrifugeuse, puis on introduit environ 40% d'eau dans un mélangeur lent à pales en forme de sigma (appareil de la Société GUITTARD). La cuve de l'appareil est portée à 80°C par l'intermédiaire d'une double enveloppe, en on maintient l'agitation pendant 1 heure une fois que la température du matériau humide a atteint 75°C.

Une fois ce malaxage terminé, la cuve est refroidie par sa double enveloppe et le produit ainsi imprégné de façon homogène est vidangé. Il présente une bonne aptitude à l'écoulement, sans la moindre tendance au collage des granules. La teneur en eau contrôlée par perte de poids à l'étuve est comprise entre 31 et 31,6%.

L'alcool polyvinylique ainsi gonflé d'eau est alimenté dans la trémie d'une extrudeuse monovis de type ANDOUART (diamètre 60 mm, longueur 20 D) à 3 zones de chauffage, équipée d'une filière plate de 1 mm et de 20 mm de large. On interpose entre l'extrémité du fourreau et la filière un refroidisseur statique de type ROSS, présentant un tambour de 200 mm de diamètre, et comprenant deux zones de chauffe.

Les conditions opératoires sont les suivantes:

– extrudeuse: entrée 90°C, milieu du corps de l'extrudeuse 200–210°C, extrémité 170°C, débit de l'ordre de 6 kg/h, vitesse de rotation de la vis 27 tours/min

– Dispositif de refroidissement: 1ère zone 110°C, 2ème zone 95°C, vitesse de rotation du tambour réglable

– Filière: 95°C

On obtient un film non-étiré dont l'épaisseur varie en fonction de la vitesse de tirage du tambour refroidisseur, de 200 µm par exemple pour une vitesse de tirage de 240 t/h à 800 μm par exemple pour une vitesse de tirage de 60 t/h.

On donne ci-après les caractéristiques du film obtenu, d'une part lorsqu'il est séché sous vide à une température inférieure à 80°C et d'autre part lorsqu'il est traité thermiquement pendant 2 min à 190°C après avoir été séché sous vide à une température inférieure à 80°C.

a) Caractéristiques du film séché sous vide à une température inférieure à 80°C.
– Cristallinité

La mesure de cristallinité est effectuée au réfractomètre d'ABBE à 23°C, en recherchant les valeurs extrêmes de l'indice de réfraction $n_1$ et $n_2$ dans le plan du film, et la valeur $n_3$ mesurée perpendiculairement au plan du film.

Ces valeurs sont:

$n_1 = 1,5460$
$n_2 = 1,5400$ →soit ñ = 1,5413
$n_3 = 1,5380$

– Propriété barrière

La perméabilité à l'oxygène est mesurée à 25°C à 74% d'humidité relative à l'aide d'un spectromètre de masse.

La valeur trouvée est la suivante:

$\Pi = 0,37\ 10^{-13}\ cm^3.\ cm^{-1}.\ (cm^2)^{-1}.\ s.\ m\ Pa^{-1}.$

b) Cristallinité du film séché sous vide à une température inférieure à 60°C puis traité thermiquement pendant 2 mn à 190°C

Ces valeurs d'indices de réfraction sont les suivantes:

$n_1 = 1,5488$
$n_2 = 1,5440$ → soit ñ = 1,5479
$n_3 = 1,5510$

Exemple 2

On prépare comme à l'exemple 1 des granules d'alcool polyvinylique contenant environ 30% d'eau et en outre 3% en poids de glycérol par rapport au poids d'alcool polyvinylique. Le glycérol est introduit en même temps que l'eau dans le mélangeur lent à pales.

On commence l'opération d'extrusion telle que décrite à l'exemple 1; après 1 heure de marche, on arrête l'opération pendant 10 minutes puis on reprend ladite opération.

On constate que le produit présent dans l'extrudeuse est resté souple et n'entrave pas la suite de l'opération.

Les caractéristiques du film obtenu sont semblables à celles du film obtenu à l'exemple 1.

Exemple 3

On utilise un film non-étiré de polytéréphtalate d'éthylène glycol présentant une viscosité de 0,64 dl/g (viscosité intrinsèque mesurée dans l'o-chlorophénol) et une épaisseur de 800 μ. Ledit film est enduit à l'aide d'une solution à 10% en poids d'adhésif PENTACOLL ET 691 A de la Société WIKO-LIN dans de l'acétate d'éthyle.

Après séchage on applique par laminage à l'aide de 2 cylindres chauffés intérieurement à 150°C et sous une pression de 60 daN/cm, avec une vitesse moyenne de lamination de 4m/mn, le film d'alcool polyvinylique de 200 microns obtenu à l'exemple 1.

Le film composite est ensuite soumis aux traitements suivants
– passage sur des rouleaux lents à une température de 80–90°C puis sur des rouleaux rapides à environ 100–105°C pour obtenir un film présentant un taux d'étirage de 4,5;
– étirage transversal dans une rame à 110°C au taux de 3,3;
– traitement thermique dans un four sous tension à une température de 190°C.

Le film composite biétiré ainsi obtenu présente les caractéristiques suivantes:
– indice moyen de réfraction ñ = 1,5448
– perméabilité à l'oxygène (25°C et 74% d'humidité relative) $\Pi = 0,3\ 10^{-12}\ cm^3.\ cm^{-1}.\ (cm^2)^{-1}\ s^{-1}.\ m\ Pa^{-1}$

Exemple 4

On utilise un complexe à base de polypropylène thermoscellable biorenté de 35 μm d'épaisseur (de marque PRYPHANE fabriqué par Rhône-Poulenc Films), obtenu par coextrusion d'un film de polypropylène et d'un film de copolymère propylène-éthylène à 4% en poids d'éthylène, puis biétirage.

On utilise un film d'alcool polyvinylique de 200 μ d'épaisseur tel que préparé à l'exemple 1, auquel on fait subir une opération d'étirage longitudinal à 120°C entre rouleaux jusqu'à obtenir une épaisseur de film de 50 μ.

Le film d'alcool polyvinylique monoétiré est passé sur rouleau chaud à 190°C.

Le complexe à base de polypropylène et le film d'alcool polyvinylique sont réunis par complexage avec l'adhésif PENTACOLL ET 691 A de WIKO-LIN.

On obtient un film composite parfaitement thermoscellable.

On mesure sa perméation à l'oxygène à 23°C et avec 50% d'humidité relative à l'aide d'un appareil OXTRAN.

On constate que celle-ci n'est pas mesurable.

A titre de comparaison la perméation à l'oxygène dans les mêmes conditions et le même appareil du complexe à base de polypropylène de 35 μm d'épaisseur est d'environ 1000 cm³/m²/24 h.

**Revendications**

1. Film d'alcool polyvinylique obtenu par fusion puis extrusion d'une solution aqueuse d'alcool polyvinylique, la matière fondue soumise à extrusion étant obtenue par plastification par cisaillement et fusion de granules d'alcool polyvinylique présentant un indice d'ester inférieur à 20, granules contenant de 25 à 35% en poids d'eau, à une température supérieure à la température de fusion d'équilibre du mélange alcool polyvinylique-eau constituant les granules, l'opération d'extrusion à travers la filière plate étant effectuée à une température au moins égale à la température de fusion d'équilibre du mélange alcool polyvinylique-eau, mais inférieure à celle à laquelle la tension de vapeur de l'eau est suffisante pour provoquer à l'air la formation de bulles, les films étant caractérisés en ce qu'ils sont obtenus selon un procédé dans lequel la température de plastification et de fusion des granules d'alcool polyvinylique est au moins égale à une température supérieure de 100°C à la température de fusion d'équilibre du mélange alcool polyvinylique-eau considéré.

2. Film d'alcool polyvinylique selon la revendication 1, caractérisé en ce que les granules d'alcool polyvinylique contiennent 30% en poids d'eau.

3. Film d'alcool polyvinylique selon la revendication 1, caractérisé en ce que la température de plastification et de fusion des granules est comprise entre 150 et 220°C.

4. Film d'alcool polyvinylique selon les revendications 1 et 3, caractérisé en ce que la température de plastification et de fusion des granules d'alcool polyvinylique contenant 30% en poids d'eau est comprise entre 160 et 220°C.

5. Film d'alcool polyvinylique selon l'une quelconque des revendications précédentes, caractérisé en ce que l'opération d'extrusion de la matière fondue à travers la filière plate est réalisée à une température comprise entre la température de fusion d'équilibre des granules et une température inférieure à 110°C.

6. Film d'alcool polyvinylique selon la revendication 5, caractérisé en ce que la température d'extrusion est comprise entre 5°C au-dessus de la température de fusion d'équilibre et 98°C.

7. Film d'alcool polyvinylique selon la revendication 2 et la revendication 6, caractérisé en ce que la température d'extrusion des granules fondues d'alcool polyvinylique contenant 30% en poids d'eau, est comprise entre 65 et 98°C.

8. Film d'alcool polyvinylique selon l'une quelconque des revendications précédentes, caractérisé en ce que les granules d'alcool polyvinylique contiennent en outre un plastifiant en quantité telle, que la température de transition vitreuse de l'alcool polyvinylique ne décroisse pas de plus de 30°C.

9. Film d'alcool polyvinylique selon l'une quelconque des revendications précédentes, caractérisé en ce qu'après extrusion à travers la filière plate, le film non étiré est soumis à une opération d'étirage longitudinal à une température de 100 à 130°C jusqu'à un taux d'étirage longitudinal de 2 à 5, éventuellement à un étirage transversal à une température de 100 à 150°C jusqu'à un taux d'étirage transversal de 2 à 8, puis éventuellement à un traitement thermique à une température supérieure à 130°C.

10. Film composite en matière thermoplastique obtenu à partir d'un film d'alcool polyvinylique faisant l'objet de l'une quelconque des revendications précédentes selon un procédé caractérisé en ce que ledit film d'alcool polyvinylique est déposé directement sur un film en matière thermoplastique enduit sur sa face à revêtir d'alcool polyvinylique d'un adhésif compatible avec la matière thermoplastique et l'alcool polyvinylique.

11. Film composite en matière thermoplastique selon la revendication 10, caractérisé en ce qu'il est préparé:
– en déposant directement un film d'alcool polyvinylique non étiré sur un film support non étiré en matière thermoplastique, enduit sur sa face à revêtir d'alcool polyvinylique d'un adhésif compatible avec la matière thermoplastique et l'alcool polyvinylique;
– en mono ou biétirant le film composite obtenu;
– et en traitant éventuellement le film composite étiré à une température supérieure à 130°C.

12. Film composite selon la revendication 11, caractérisé en ce que le dépôt de film d'alcool polyvinylique sur le film enduit en matière thermoplastique est réalisé par extrusion-laminage à une température de 50 à 200°C et une pression de 60 plus ou moins 10 daN/cm.

13. Film composite selon la revendication 11, caractérisé en ce que le dépôt du film d'alcool polyvinylique sur le film enduit en matière thermoplastique est réalisé par complexage, par placage en continu à une température de 60 à 200°C et une pression de 100 bars.

14. Film composite selon l'une quelconque des revendications 11 à 13, caractérisé en ce que la ou les opérations d'étirage consistent en un étirage longitudinal à une température de 100 à 130°C jusqu'à un taux d'étirage longitudinal de 2 à 5, et éventuellement en un étirage transversal à une température de 100 à 150°C jusqu'à un taux d'étirage transversal de 2 à 8.

15. Film composite selon l'une quelconque des revendications 11 à 14, caractérisé en ce que le traitement thermique est réalisé à une température de 140–220°C.

16. Film composite selon la revendication 10, caractérisé en ce qu'il est préparé par complexage d'un film mono ou biétiré d'alcool polyvinylique, éventuellement traité thermiquement, sur un film de matière thermoplastique mono ou biétiré éventuellement métallisé et enduit sur sa face à revêtir d'alcool polyvinylique d'un adhésif compatible avec la matière thermoplastique et l'alcool polyvinylique.

**Patentansprüche**

1. Polyvinylalkoholfolie, erhalten durch Schmelzen und dann Extrudieren einer wässrigen Polyvinylalkohollösung, wobei das dem Extrudieren unterworfene geschmolzene Material erhalten worden ist durch Plastifizieren mittels Scherung und Schmelzen eines 25 bis 35 Gew.% Wasser enthaltenden Granulats aus Polyvinylalkohol mit einer Esterzahl unter 20 bei einer Temperatur oberhalb der Gleichgewichts-Schmelztemperatur des Gemisches aus Polyvinylalkohol und Wasser, aus dem das Granulat besteht, und wobei das Extrudieren durch eine flache Düse ausgeführt wird bei einer Temperatur, die mindestens gleich ist der Gleichgewichts-Schmelztemperatur des Gemisches aus Polyvinylalkohol und Wasser, aber unterhalb der Temperatur liegt, bei der der Dampfdruck des Wassers ausreicht, um an der Luft Blasenbildung hervorzurufen, dadurch gekennzeichnet, dass die Folie nach einem Verfahren erhalten worden ist, bei dem die Plastifizierungs- und Schmelztemperatur des Polyvinylalkoholgranulats mindestens gleich ist einer Temperatur, die um 100°C über der Gleichgewichts-Schmelztemperatur des in Betracht gezogenen Gemisches aus Polyvinylalkohol und Wasser liegt.

2. Polyvinylalkoholfolie nach Anspruch 1, dadurch gekennzeichnet, dass das Polyvinylalkoholgranulat 30 Gew.% Wasser enthält.

3. Polyvinylalkoholfolie nach Anspruch 1, dadurch gekennzeichnet, dass die Plastifizierungs- und Schmelztemperatur des Granulats 150 bis 220°C beträgt.

4. Polyvinylalkoholfolie nach den Ansprüchen 1 bis 3, dadurch gekennzeichnet, dass die Plastifizierungs- und Schmelztemperatur des Polyvinylalkoholgranulats, enthaltend 30 Gew.% Wasser, 160 bis 220°C beträgt.

5. Polyvinylalkoholfolie nach einem der vorangehenden Ansprüche, dadurch gekennzeichnet, dass das Extrudieren des geschmolzenen Materials durch die flache Düse bei einer Temperatur zwischen der Gleichgewichtsschmelztemperatur des Granulats und einer Temperatur unterhalb 110°C vorgenommen wird.

6. Polyvinylalkoholfolie nach Anspruch 5, dadurch gekennzeichnet, dass die Extrudiertemperatur zwischen 5°C oberhalb der Gleichgewichts-Schmelztemperatur und 98°C liegt.

7. Polyvinylalkoholfolie nach Anspruch 2 und Anspruch 6, dadurch gekennzeichnet, dass die Extrudiertemperatur des geschmolzenen Granulats aus Polyvinylalkohol, enthaltend 30 Gew.% Wasser, zwischen 65 und 98°C liegt.

8. Polyvinylalkoholfolie nach einem der vorangehenden Ansprüche, dadurch gekennzeichnet, dass das Polyvinylalkoholgranulat zusätzlich einen Weichmacher in solcher Menge enthält, dass die Glasübergangstemperatur des Polyvinylalkohols nicht um mehr als 30°C abnimmt.

9. Polyvinylalkoholfolie nach einem der vorangehenden Ansprüche, dadurch gekennzeichnet, dass nach dem Extrudieren durch die flache Düse die nicht gereckte Folie in Längsrichtung bei einer Temperatur von 100 bis 130°C gereckt wird bis zu einem Längs-Reckgrad von 2 bis 5 und gegebenenfalls in Querrichtung bei einer Temperatur von 100 bis 150°C gereckt wird bis zu einem Quer-Reckgrad von 2 bis 8, sowie gegebenenfalls einer Wärmebehandlung bei einer Temperatur oberhalb 130°C unterworfen wird.

10. Mehrschichtfolie aus thermoplastischem Material, erhaltend ausgehend von einer Polyvinylalkoholfolie nach einem der vorangehenden Ansprüche, entsprechend einem Verfahren dadurch gekennzeichnet, dass die Polyvinylalkoholfolie direkt auf eine Folie aus thermoplastischem Material aufgebracht wird, die auf ihrer Seite, die mit dem Polyvinylalkohol überzogen werden soll, mit einem Klebmittel beschichtet ist, das mit dem thermoplastischen Material und mit dem Polyvinylalkohol verträglich ist.

11. Mehrschichtfolie aus thermoplastischem Material nach Anspruch 10, dadurch gekennzeichnet, dass sie hergestellt worden ist durch:
  – direktes Aufbringen einer nichtgereckten Polyvinylalkoholfolie auf eine nichtgereckte Trägerfolie aus thermoplastischem Material, die auf der Seite, die mit dem Polyvinylalkohol überzogen wird, mit einem Klebmittel beschichtet ist, das mit dem thermoplastischen Material und dem Polyvinylalkohol verträglich ist,
  – einfaches oder zweifaches Recken der erhaltenen Mehrschichtfolie,
  – und gegebenenfalls Behandeln der gereckten Mehrschichtfolie bei einer Temperatur oberhalb 130°C.

12. Mehrschichtfolie nach Anspruch 11, dadurch gekennzeichnet, dass das Aufbringen der Polyvinylalkoholfolie auf die beschichtete Folie aus thermoplastischem Material mittels Extrusions-Beschichtung bei einer Temperatur von 50 bis 200°C und unter einem Druck von 60 ± 10 daN/cm erfolgt.

13. Mehrschichtfolie nach Anspruch 11, dadurch gekennzeichnet, dass das Aufbringen der Polyvinylalkoholfolie auf die beschichtete Folie aus thermoplastischem Material durch Komplexieren mittels kontinuierlichem Plattieren bei einer Temperatur von 60 bis 200°C und unter einem Druck von 100 bar erfolgt.

14. Mehrschichtfolie nach einem der Ansprüche 11 bis 13, dadurch gekennzeichnet, dass das Recken aus einem Recken in Längsrichtung bei einer Temperatur von 100 bis 130°C bis zu einem Längs-Reckgrad von 2 bis 5 und gegebenenfalls aus einem Recken in Querrichtung bei einer Temperatur von 100 bis 150°C bis zu einem Quer-Reckgrad von 2 bis 8 besteht.

15. Mehrschichtfolie nach einem der Ansprüche 11 bis 14, dadurch gekennzeichnet, dass die Wärmebehandlung bei einer Temperatur von 140 bis 220°C vorgenommen wird.

16. Mehrschichtfolie nach Anspruch 10, dadurch gekennzeichnet, dass sie hergestellt wird durch Komplexieren einer einfach oder zweifach gereckten Folie aus Polyvinylalkohol, gegebenenfalls thermisch behandelt, auf eine Folie aus thermoplastischem Material, die einfach oder zweifach gereckt und gegebenenfalls metallisiert ist und auf der Seite, die mit dem Polyvinylalkohol überzogen wird, mit einem Klebmittel beschichtet ist, das mit dem thermoplastischen Material und dem Polyvinylalkohol verträglich ist.

**Claims**

1. Polyvinyl alcohol film obtained by melting followed by extrusion of an aqueous solution of polyvinyl alcohol, the molten material subjected to extrusion being obtained by plasticizing by shearing and melting granules of polyvinyl alcohol possessing an ester number of less than 20, the granules containing from 25 to 35% by weight of water, at a temperature above the equilibrium melting point of the polyvinyl alcohol/water mixture which forms the granules, and the operation of slot-die extrusion being performed at a temperature at least equal to the equilibrium melting point of the polyvinyl alcohol/water mixture but below that at which the water vapour pressure is sufficient to cause, in the air, the formation of bubbles, the films being characterized in that they are obtained according to a process in which the plasticizing temperature and melting point of the polyvinyl alcohol granules is at least equal to a temperature 100°C higher than the equilibrium melting point of the polyvinyl alcohol/water mixture in question.

2. Polyvinyl alcohol film according to Claim 1, characterized in that the polyvinyl alcohol granules contain 30% by weight of water.

3. Polyvinyl alcohol film according to Claim 1, characterized in that the plasticizing temperature and melting point of the granules is between 150 and 220°C.

4. Polyvinyl alcohol film according to Claims 1 and 3, characterized in that the plasticizing temperature and melting point of the polyvinyl alcohol granules containing 30% by weight of water is between 160 and 220°C.

5. Polyvinyl alcohol film according to any one of the preceding claims, characterized in that the operation of slot-die extrusion of the molten material is carried out at a temperature between the equilibrium melting point of the granules and a temperature below 110°C.

6. Polyvinyl alcohol film according to Claim 5, characterized in that the extrusion temperature is between 5°C above the equilibrium melting point and 98°C.

7. Polyvinyl alcohol film according to Claim 2 and Claim 6, characterized in that the temperature of extrusion of the molten polyvinyl alcohol granules containing 30% by weight of water is between 65 and 98°C.

8. Polyvinyl alcohol film according to any one of the preceding claims, characterized in that the polyvinyl alcohol granules contain, in addition, a plasticizer in an amount such that the glass transition temperature of the polyvinyl alcohol does not decrease by more than 30°C.

9. Polyvinyl alcohol film according to any one of the preceding claims, characterized in that, after slot-die extrusion, the undrawn film is subjected to a longitudinal drawing operation at a temperature of 100 to 130°C up to a longitudinal draw ratio of 2 to 5, optionally to a transverse drawing at a temperature of 100 to 150°C up to a transverse draw ratio of 2 to 8, and then optionally to a heat treatment at a temperature above 130°C.

10. Composite film of thermoplastic material, obtained from a polyvinyl alcohol film which forms the subject of any one of the preceding claims according to a process characterized in that the said polyvinyl alcohol film is deposited directly on a film of thermoplastic material which is coated, on its face to be covered with polyvinyl alcohol, with an adhesive compatible with the thermoplastic material and the polyvinyl alcohol.

11. Composite film of thermoplastic material according to Claim 10, characterized in that it is prepared:

by directly depositing an undrawn film of polyvinyl alcohol on an undrawn support film of thermoplastic material which is coated, on its face to be covered with polyvinyl alcohol, with an adhesive compatible with the thermoplastic material and the polyvinyl alcohol;

by singly or doubly drawing the composite film obtained; and

by optionally treating the drawn composite film at a temperature above 130°C.

12. Composite film according to Claim 11, characterized in that the deposition of polyvinyl alcohol film on the coated film of thermoplastic material is carried out by extrusion lamination at a temperature of 50 to 200°C and a pressure of 60 plus or minus 10 daN/cm.

13. Composite film according to Claim 11, characterized in that the deposition of the polyvinyl alcohol film on the coated film of thermoplastic material is carried out by forming a composite by continuous bonding at a temperature of 60 to 200°C and a pressure of 100 bars.

14. Composite film according to any one of Claims 11 to 13, characterized in that the drawing operation or operations consist in a longitudinal drawing at a temperature of 100 to 130°C up to a longitudinal draw ratio of 2 to 5, and optionally a transverse drawing at a temperature of 100 to 150°C up to a transverse draw ratio of 2 to 8.

15. Composite film according to any one of Claims 11 to 14, characterized in that the heat treatment is carried out at a temperature of 140–220°C.

16. Composite film according to Claim 10, characterized in that it is prepared by forming a composite of a singly or doubly drawn film of polyvinyl alcohol, optionally heat-treated, with a singly or doubly drawn film of thermoplastic material which is optionally metal-plated and coated, on its face to be covered with polyvinyl alcohol, with an adhesive compatible with the thermoplastic material and the polyvinyl alcohol.

PLANCHE UNIQUE

Température de fusion d'équilibre en °C

Fraction pondérale d'eau $P_{H_2O}$